# EUROPÄISCHE PATENTANMELDUNG

(11) **EP 4 512 225 A2**
(43) Veröffentlichungstag der Anmeldung: **26.02.2025**
(21) Anmeldenummer: 24182850.8
(22) Anmeldetag: 18.06.2024
(51) Int. Cl.: A01D 41/127

(54) **AUFFANGELEMENT ZUM AUFFANGEN VON PARTIKELN ZUR BEPROBUNG EINER SELBSTFAHRENDEN ERNTEMASCHINE**

(30) Priorität: 24.08.2023 DE 102023122681
(71) Anmelder: CLAAS Selbstfahrende Erntemaschinen GmbH, 33428 Harsewinkel (DE)
(72) Erfinder: Topmöller, Philipp, 33442 Herzebrock-Clarholz (DE); Fischer, Frédéric, 59823 Arnsberg (DE)
(74) Vertreter: CLAAS 365FarmNet GmbH

(57) **Zusammenfassung**

Die vorliegende Erfindung betrifft ein Auffangelement (1) zum Auffangen von Partikeln zur Beprobung, die von einer selbstfahrenden Erntemaschine, insbesondere einem Mähdrescher (12), durch zumindest eine Verteilvorrichtung (16) ausgebracht werden, wobei das Auffangelement (1) einen quaderförmigen Boden (2) und zwei Längsseitenwände (3) und zumindest zwei Querseitenwände (4) aufweist, die senkrecht zum Boden (2) orientiert sind, die einen Auffangbereich des Auffangelementes (1) begrenzen, wobei das Auffangelement (1) einen randseitigen Überlappungsabschnitt (6) aufweist, der sich lateral an den Boden (2) anschließt und über eine der Längsseitenwände (3) hinausragt.

## Beschreibung

Die vorliegende Erfindung betrifft ein Auffangelement zum Auffangen von Partikeln, insbesondere Erntegutpartikeln, zur Beprobung gemäß dem Oberbegriff des Anspruches 1. Weiterhin ist ein selbstfahrender Mähdrescher gemäß dem Oberbegriff des Anspruches 9 Gegenstand der vorliegenden Erfindung.

Ein Auffangelement sowie ein selbstfahrender Mähdrescher der eingangs genannten Art sind aus der US 4,393,704 A bekannt. An der Unterseite des Mähdreschers ist vor den Hinterrädern ein Tragrahmen angeordnet, welcher der Aufnahme und Ablage einer auf dem Boden ablegbaren rechteckförmigen Abwurfbox dient. Zur Ablage der Abwurfbox wird der Tragrahmen durch Aktuatoren in eine abgesenkte Betriebsposition überführt, um dann durch Betätigung einer am Tragrahmen angeordneten Verriegelungsanordnung zwischen den Hinterrädern abgelegt zu werden. Nachteilig an der Abwurfbox und ihrer Anordnung ist, dass nur eine einzige Abwurfbox mitführbar ist und dass der Tragrahmen und die daran angeordnete Verriegelungsanordnung komplex aufgebaut sind. Die aus Stahl bestehende Abwurfbox muss zwischen den Rädern des Mähdreschers abgeworfen werden, um ein versehentliches Überfahren zu vermeiden.

Die RU 2 556 073 C2 beschreibt eine Anordnung jeweils drei nebeneinander und hintereinander angeordneten rechteckförmigen Auffangschalen, die an einem quer zur Fahrtrichtung verlaufenden teleskopierbaren Tragarm im rückwärtigen Bereich eines Mähdreschers unterhalb einer Strohverteilvorrichtung angeordnet sind. Die in drei Reihen hintereinander angeordneten rechteckförmigen Auffangschalen sind mittels Stahlkabeln miteinander verbunden und werden vom Mähdrescher hinter diesem über den Boden gezogen. Ist ein stationärer Betriebszustand des Mähdreschers erreicht, werden der Tragarm und die daran angeordneten Auffangschalen vom Mähdrescher abgekoppelt. Eine derartige Anordnung ist nachteilig, da die Auffangschalen hinten über den Mähdrescher hinausragen und somit bereits im laufenden Betrieb vor einem festgelegten Ablageort mit aus dem Mähdrescher abgeschiedenen Erntegutbestandteilen beschickt werden. Die Auffangschalen sind sowohl in Längsrichtung als auch in Querrichtung räumlich zueinander beabstandet, so dass sich über die Austragbreite der Verteilvorrichtung Bereiche ausbilden, in denen ausgebrachte Erntegutbestandteile von den Auffangschalen nicht aufgenommen werden.

Ausgehend vom vorstehend genannten Stand der Technik liegt der Erfindung die Aufgabe zugrunde, ein Auffangelement zum Auffangen von Partikeln zur Beprobung sowie einen Mähdrescher weiterzubilden, wodurch eine Ablage mehrerer Auffangelemente parallel nebeneinander auf dem Boden ermöglicht wird, wobei die seitlichen Abstände der Auffangelemente zueinander minimiert sind.

Diese Aufgabe wird erfindungsgemäß durch ein Auffangelement mit den Merkmalen des Anspruches 1 sowie einen selbstfahrenden Mähdrescher mit den Merkmalen des Anspruches 9 gelöst. Vorteilhafte Weiterbildungen sind Gegenstand der abhängigen Ansprüche.

Gemäß dem Anspruch 1 wird ein Auffangelement zum Auffangen von Partikeln zur Beprobung, die von einer selbstfahrenden Erntemaschine, insbesondere einem Mähdrescher, durch zumindest eine Verteilvorrichtung ausgebracht werden, wobei das Auffangelement einen quaderförmigen Boden und zwei Längsseitenwände und zumindest zwei Querseitenwände aufweist, die senkrecht zum Boden orientiert sind, die einen Auffangbereich des Auffangelementes begrenzen. Erfindungsgemäß ist vorgesehen, dass das Auffangelement einen randseitigen Überlappungsabschnitt aufweist, der sich lateral an den Boden anschließt und über eine der Längsseitenwände hinausragt. Mittels des Überlappungsabschnitts lässt sich eine Führung eines benachbarten Auffangelementes bei der Ablage auf dem erreichen. Dies dient einer gleichmäßigeren Ausrichtung von nebeneinander abgelegten Auffangelementen und zugleich einer Minimierung des seitlichen Abstands zueinander. Somit kann bei einer Ablage mehrerer Auffangelemente nebeneinander eine im Wesentlichen geschlossene Auffangfläche bereitgestellt werden, die sich bis über die gesamte Auswurfbreite der Verteilvorrichtung erstrecken kann.

Insbesondere kann sich der randseitige Überlappungsabschnitt zumindest abschnittsweise parallel zur Längsseitenwand erstrecken. Das Auffangelement kann durch einen Mittensteg in zwei Fächer unterteilt sein. Insbesondere können die beiden Fächer die gleiche Grundfläche aufweisen. Der randseitige Überlappungsabschnitt erstreckt sich bei einer Ausführung mit zwei Fächern zumindest abschnittsweise parallel zur Längsseitenwand über ein Fach hinaus. Bei einer Ausführung mit nur einem Fach erstreckt sich randseitige Überlappungsabschnitt im Wesentlichen über die Länge des nur einen Faches.

Gemäß einer Weiterbildung kann die dem Auffangen der Partikeln dienende Oberfläche des Bodens mit sich senkrecht zum Boden erstreckenden zylindrischen Rückhalteelementen versehen sein, deren Höhe zumindest der hälftigen Höhe der Längs- und/oder Querseitenwände entspricht. Das insbesondere symmetrische Vorsehen und Anordnen von Rückhalteelementen hat den Vorteil, dass einem Überblasen oder Ausblasen von bereits von dem Auffangelement aufgefangenen Partikel begegnet werden kann.

Die Rückhalteelemente weisen bevorzugt einen kreiszylindrischen Querschnitt auf. Insbesondere können die Rückhalteelemente im Wesentlichen kegelförmig ausgeführt sein, wobei die Spitze abgerundet sein kann. Die Rückhalteelemente sind insbesondere matrixförmig auf der Oberfläche des Bodens verteilt angeordnet. Besonders bevorzugt können die in Reihen nebeneinander angeordneten Rückhalteelemente in Querrichtung einen im Wesentlichen gleichen Abstand zueinander aufweisen. Die in Längsrichtung des Auffangelements gesehen insbesondere in parallelen Reihen hintereinander angeordneten Rückhalteelemente können dabei in Querrichtung gesehen wechselweise mit einer unterschiedlichen Anzahl von nebeneinander angeordneten Anzahl von Rückhalteelementen ausgeführt sein. So kann beispielsweise jede zweite Reihe mit einer abweichenden Anzahl von Rückhalteelementen ausgeführt sein.

Bevorzugt kann der randseitige Überlappungsabschnitt auf seiner Oberseite zumindest ein Verbindungselement aufweisen und der Boden kann an seiner Unterseite auf einem dem Überlappungsabschnitt gegenüberliegenden Abschnitt zumindest ein komplementäres Verbindungselement aufweisen. Als komplementäre Verbindungselemente können beispielsweise Druckknöpfe oder ein Klettverschluss verwendet werden.

Insbesondere kann das Auffangelement aus einem gummiartigen Material bestehen. So kann als Material für das Auffangelement beispielsweise Zellkautschuk verwendet werden. Neben einem geringen Gewicht können sich aus einem gummiartigen Material bestehende Auffangelemente durch eine hohe Strapazierfähigkeit in Relation zum Gewicht auszeichnen. Dies erlaubt auch ein Überfahren des Auffangelementes durch die Erntemaschine, welche die Auffangelemente ausbringt. Ein weiterer Vorteil ergibt sich bei der Herstellung des Auffangelements aus einem gummiartigen Material daraus, dass das Auffangelement mit seinen Längs- und Querseitenwänden sowie den optionalen zylindrischen Rückhalteelementen auf der Oberfläche des Bodens einstückig ausgebildet sein kann.

Weiter bevorzugt kann das Auffangelement einen randseitigen Befestigungsabschnitt aufweisen, der sich lateral an den Boden anschließt und über eine der Querseitenwände hinausragt. Der Befestigungsabschnitt ist orthogonal zum randseitigen Überlappungsabschnitt angeordnet.

Weiterhin kann der Befestigungsabschnitt mit zumindest einer metallverstärkten Zugöse ausgeführt sein.

Des Weiteren können am Befestigungsabschnitt benachbart zu der zumindest einen Zugöse Druckknöpfe angeordnet sein.

Insbesondere kann genau eine Zugöse vorgesehen sein, die bezogen auf die Breite des Bodens zentriert im Befestigungsabschnitt angeordnet ist. Hierdurch kann einer ungewollten Schrägstellung bei der Ablage des Auffangelementes begegnet werden.

Die eingangs gestellte Aufgabe wird weiterhin durch einen selbstfahrenden Mähdrescher mit den Merkmalen des nebengeordneten Anspruches 9 gelöst.

Gemäß dem Anspruch 9 wird ein selbstfahrender Mähdrescher vorgeschlagen, der ein Vorsatzgerät zum Ernten von Erntegut, eine Abscheidevorrichtung, eine Reinigungsvorrichtung sowie zumindest eine Verteilvorrichtung, die dazu eingerichtet ist, von der Abscheidevorrichtung und der Reinigungsvorrichtung zugeführtes Erntegut hinter dem Mähdrescher auszubringen, umfasst. Erfindungsgemäß ist vorgesehen, dass an der Unterseite des Mähdreschers zumindest zwei Ablagevorrichtungen zur Ablage von Auffangelementen auf dem Boden angeordnet sind, wobei die zumindest zwei Ablagevorrichtungen übereinanderliegend angeordnet sind. Hierdurch können mehrere Auffangelemente gleichzeitig mitgeführt werden, die einzeln auf dem Boden ablegbar sind. Die Ablage erfolgt dabei nach dem Erreichen eines quasistationären Betriebszustands des Mähdreschers, sodass von Verteilvorrichtung ausgebrachte und mittel der Auffangelemente aufgefangene Erntegutpartikel den Betriebsparametern des zu überprüfenden Betriebszustands des Mähdreschers entsprechen.

Insbesondere können die zumindest zwei Ablagevorrichtungen zur Ablage von Auffangelementen eingerichtet sein, die nach einem der Ansprüche 1 bis 8 ausgeführt sind.

Bevorzug kann die jeweilige Ablagevorrichtung zwei einander gegenüberliegend angeordnete Haken aufweisen, wobei ein Haken durch einen Aktuator relativ zum gegenüberliegenden Haken verschwenkbar ausgeführt ist. Die jeweilige Ablagevorrichtung kann ein Tragelement aufweisen, an dem der eine Haken ortsfest angeordnet ist und der andere Haken, der durch den Aktuator relativbeweglich ist, um eine Achse schwenkbar.

Dabei können sich in einer Halteposition die Haken mit ihren freien Enden abschnittsweise überlappen und in einer Freigabeposition können das freie Ende des schwenkbaren Hakens zum freien Ende des anderen Hakens so weit beabstandet ist, dass sich ein Spalt ausbildet. In der Freigabeposition sind die Haken außer Eingriff mit der Zugöse des Auffangelementes, so dass dieses auf dem Boden abgelegt werden kann.

Weiterhin kann dem Mähdrescher eine Steuereinheit zugeordnet sein, die dazu ausgeführt und eingerichtet ist, den Aktuator der jeweiligen Ablagevorrichtung anzusteuern, um den schwenkbaren Haken zwischen der Halteposition und der Freigabeposition zu überführen. Die Ablage der Auffangelemente lässt sich somit aus einer Kabine des Mähdreschers gezielt ansteuern.

Bevorzugt kann zwischen Vorderachse und Hinterachse des Mähdreschers zumindest ein Träger parallel verlaufend befestigbar oder befestigt sein, an welchem die zumindest zwei Ablagevorrichtungen übereinanderliegend angeordnet sind. Insbesondere kann an dem Träger an zumindest einer Außenseite ein weiterer Träger mit übereinanderliegend angeordneten Ablagevorrichtungen angeordnet werden.

Insbesondere können an dem zumindest einen Träger zumindest zwei Ablagevorrichtungen in einer horizontalen Ebene liegend nebeneinander angeordnet sein.

Es lassen sich bei einer Messfahrt somit mehrere Auffangelemente in Fahrtrichtung gesehen hintereinander und in jeweils einer Reihe nebeneinander auf dem Feld ablegen, um von der Verteilvorrichtung ausgebrachte Partikel zur Beprobung aufzufangen.

Die vorliegende Erfindung wird nachstehend anhand eines in den Zeichnungen dargestellten Ausführungsbeispieles näher erläutert.

Es zeigen:
- Fig. 1: schematisch und exemplarisch eine Draufsicht auf ein Auffangelement;
- Fig. 2: schematisch und exemplarisch eine perspektivische Ansicht des Auffangelementes;
- Fig. 3: schematisch und exemplarisch eine perspektivische Ansicht einer Ausführungsform des Auffangelementes;
- Fig. 4: schematisch und exemplarisch in einer Draufsicht ein durch einen Mähdrescher zu bearbeitendes Feld;
- Fig. 5: schematisch und exemplarisch eine Teilansicht eines Trägers mit daran angeordneten Ablagevorrichtungen im Längsschnitt; und
- Fig. 6: schematisch und exemplarisch die Teilansicht gemäß Fig. 5 in einer Seitenansicht der Ablagevorrichtungen.

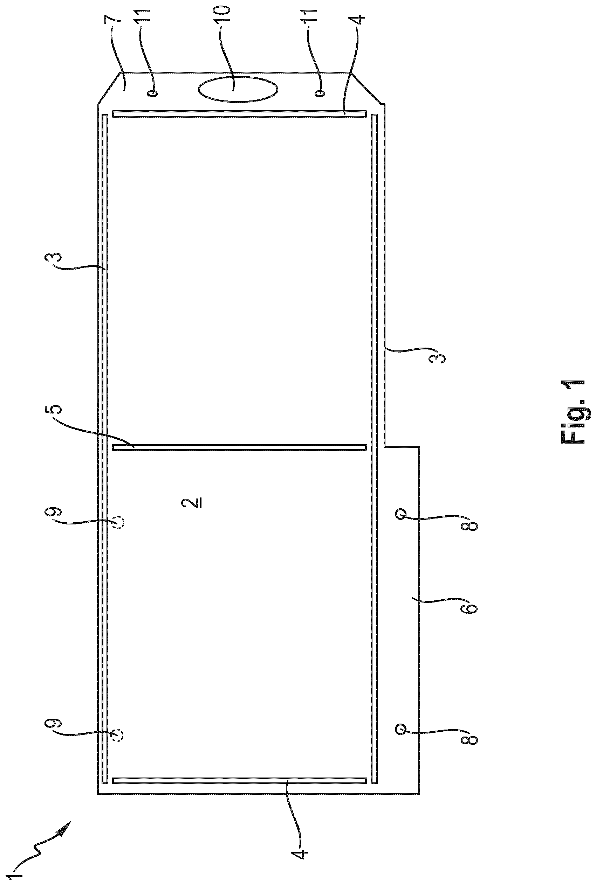

In Fig. 1 ist schematisch und exemplarisch eine Draufsicht auf ein Auffangelement 1 zum Auffangen von Partikeln, insbesondere Erntegutpartikeln, zur Beprobung die von einer selbstfahrenden Erntemaschine, insbesondere einem Mähdrescher 12, durch zumindest eine Verteilvorrichtung 16 ausgebracht werden, dargestellt.

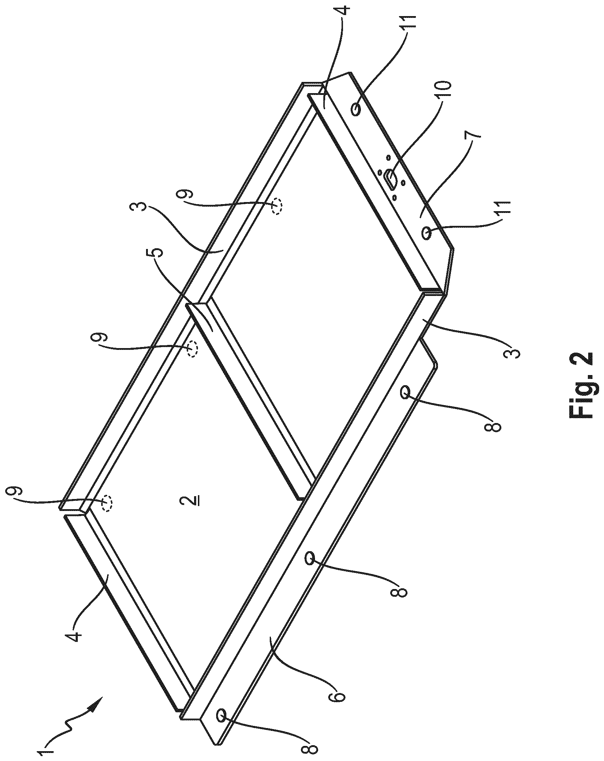

Das Auffangelement 1 weist einen im Wesentlichen quaderförmigen Boden 2 und zwei Längsseitenwände 3 und zumindest zwei Querseitenwände 4 auf. Die beiden Längsseitenwände 3 und die zumindest zwei Querseitenwände 4 sind senkrecht zum Boden 2 orientiert, wie in Fig. 2 dargestellt. Der Boden 2 ist bevorzugt mit einer glatten Oberfläche ausgeführt. Die beiden Längsseitenwände 3 und die zumindest zwei Querseitenwände 4 weisen im Wesentlichen die gleiche Höhe auf. Die beiden Längsseitenwände 3 und die zumindest zwei Querseitenwände 4 begrenzen einen Auffangbereich des Auffangelementes 1, in welchem die Partikel zur Beprobung aufgefangen werden sollen. Zusätzlich kann auf dem Boden 2 des Auffangelementes 1 ein Mittensteg 5 angeordnet sein, welcher das Auffangelement 1 in zwei im Wesentlichen gleichgroße Fächer unterteilt.

Das Auffangelement 1 besteht aus einem gummiartigen Material. Beispielsweise kann Zellkautschuk, ein Elastomer, als Material für das Auffangelement verwendet werden.

Das Auffangelement 1 weist einen randseitigen Überlappungsabschnitt 6 auf. Der Überlappungsabschnitt 6 schließt sich lateral an den Boden 2 an und ragt über eine der Längsseitenwände 3 hinaus. Der randseitige Überlappungsabschnitt 6 erstreckt sich zumindest abschnittsweise parallel zum Verlauf der Längsseitenwand 3. Der randseitige Überlappungsabschnitt 6 kann eine im Wesentlichen quaderförmige Kontur aufweisen.

Das Auffangelement 1 weist einen randseitigen Befestigungsabschnitt 7 auf, der sich lateral an den Boden 2 anschließt und über eine der Querseitenwände 4 hinausragt. Der randseitige Befestigungsabschnitt 7 verläuft orthogonal zum randseitigen Überlappungsabschnitt 6. Der randseitige Befestigungsabschnitt 7 kann eine im Wesentlichen trapezförmige Kontur aufweisen.

In dem in Fig. 1 gezeigten Ausführungsbeispiel erstreckt sich der Überlappungsabschnitt 6 ausgehend von der dem Befestigungsabschnitt 7 abgewandten Seite bis auf Höhe des Mittensteges 5. In dem in Fig. 2 gezeigten Ausführungsbeispiel erstreckt sich der Überlappungsabschnitt 6 ausgehend von der dem Befestigungsabschnitt 7 abgewandten Seite über den Mittensteg 5 hinaus.

Der randseitige Überlappungsabschnitt 6 weist auf seiner Oberseite zumindest ein Verbindungselement 8 auf. Hier und vorzugsweise sind zumindest zwei Verbindungselemente 8 auf der Oberseite des Überlappungsabschnitts 6 angeordnet. Der Boden 2 weist an seiner Unterseite auf einem dem Überlappungsabschnitt 6 gegenüberliegenden Abschnitt zumindest ein zum Verbindungselement 8 komplementäres Verbindungselement 9 auf. Als komplementäre Verbindungselemente 8, 9 können beispielsweise Druccknöpfe oder ein Klettverschluss verwendet werden. Die Anordnung des zumindest einen Verbindungselementes 8 auf der Oberseite des Überlappungsabschnitts 6 korrespondiert mit der Lage der Verbindungselemente 9 an der Unterseite des Bodens 2. Hierdurch lassen sich zwei Auffangelemente 1 miteinander lösbar verbinden. Indem das eine Auffangelement 1 mit seinem Boden 2 abschnittsweise auf dem Überlappungsabschnitt 6 des benachbart angeordneten Auffangelementes 1 aufliegt.

Der Befestigungsabschnitt 7 kann mit zumindest einer metallverstärkten Zugöse 10, in den Fig. 1 und 2 nur angedeutet, ausgeführt sein. An dem Befestigungsabschnitt 7 können benachbart zu der zumindest einen Zugöse 10 Druckknöpfe 11 angeordnet sein. Bevorzugt ist genau eine Zugöse 10 vorgesehen, die bezogen auf die Breite des Bodens 2 zentriert im Befestigungsabschnitt 7 angeordnet ist.

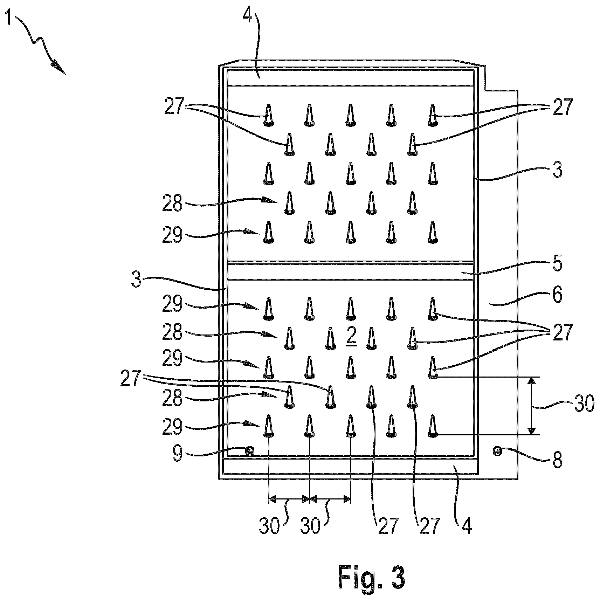

In Fig. 3 ist schematisch und exemplarisch eine perspektivische Ansicht des Auffangelementes 1 dargestellt. Gemäß dieser Weiterbildung kann die dem Auffangen der Partikeln dienende Oberfläche des Bodens 2 mit sich senkrecht zum Boden 2 erstreckenden zylindrischen Rückhalteelementen 27 versehen sein, deren Höhe zumindest der hälftigen Höhe der Längs- und Querseitenwände 3, 4 entspricht. Die Höhe der Rückhalteelemente 27 ist derart gewählt, dass diese die Höhe der Längs- und Querseitenwände 3, 4 nicht überschreitet.

Das insbesondere symmetrische Vorsehen und Anordnen von Rückhalteelementen 27 dient dazu, dass einem Überblasen oder Ausblasen von bereits von dem Auffangelement 1 aufgefangenen Partikel begegnet werden kann. Dies ist auf zunehmende Austraggeschwindigkeiten der Verteilvorrichtung 16 des Mähdreschers 12 zurückzuführen, die erforderlich ist, um große Arbeitsbreiten bei der Ausbringung der Erntegutpartikel durch die Verteilvorrichtung 16 abzudecken.

Die Rückhalteelemente 27 weisen bevorzugt einen kreiszylindrischen Querschnitt auf. Insbesondere können die Rückhalteelemente 27 im Wesentlichen kegelstumpfförmig ausgeführt sein. Die Rückhalteelemente 27 sind insbesondere matrixförmig auf der Oberfläche des Bodens 2 verteilt angeordnet. Besonders bevorzugt können die in Reihen 28, 29 angeordneten Rückhalteelemente 27 in Querrichtung einen im Wesentlichen gleichen Abstand 30 zueinander aufweisen. Die Reihen 28, 29 können in Längsrichtung gesehen ebenfalls im Abstand 30 zueinander versetzt angeordnet sein.

Die in Längsrichtung des Auffangelements 1 gesehen insbesondere in parallelen Reihen 28 ,29 hintereinander angeordneten Rückhalteelemente 27 können dabei in Querrichtung gesehen wechselweise mit einer unterschiedlichen Anzahl von nebeneinander angeordneten Anzahl von Rückhalteelementen 27 ausgeführt sein. So kann beispielsweise jede als zweite Reihe ausgeführte Reihe 28 mit einer abweichenden Anzahl von Rückhalteelementen 27 ausgeführt sein. Beispielsweise weisen die Reihen 29 eine ungerade Anzahl an Rückhalteelementen 27 und die Reihen 28 eine gerade Anzahl auf.

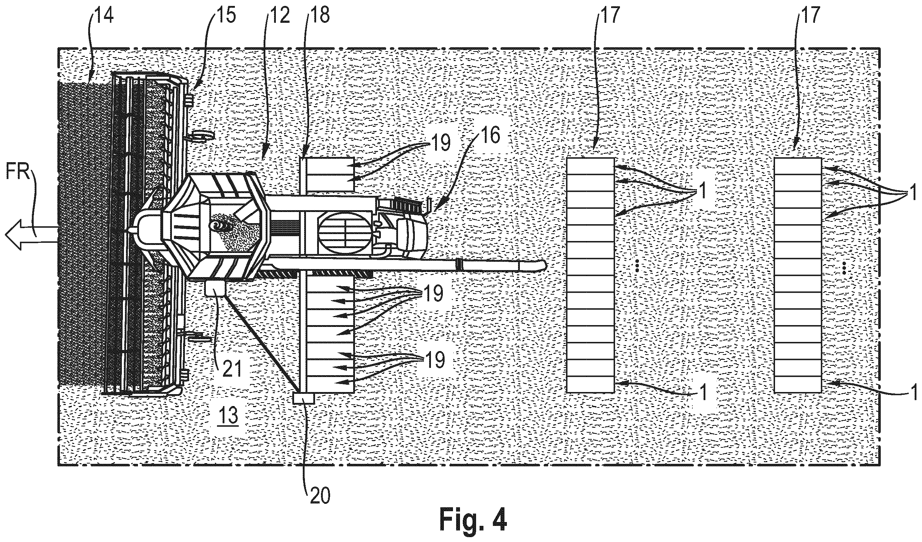

Die Darstellung in Fig. 4 zeigt schematisch und exemplarisch in einer Draufsicht ein durch einen Mähdrescher 12 zu bearbeitendes Feld 13. Ein Bestand mit Erntegut 14 wird von einem Vorsatzgerät 15 am Mähdrescher 12 abgeerntet und dem Mähdrescher 12 zur Bearbeitung zugeführt. Der Mähdrescher 12 weist neben einer Dreschvorrichtung eine Abscheidevorrichtung, eine Reinigungsvorrichtung sowie zumindest eine Verteilvorrichtung 16 auf, die dazu eingerichtet ist, von der Abscheidevorrichtung und der Reinigungsvorrichtung zugeführtes Erntegut hinter dem Mähdrescher 12 auf dem Feld 13 auszubringen.

Hinter dem Mähdrescher 12 sind in einem einstellbaren Abstand zueinander zumindest zwei Reihen 17 mit Auffangelementen 1 auf dem Feldboden abgelegt. Die Auffangelemente 1 einer jeden Reihe 17 sind miteinander durch die komplementären Verbindungselemente 8, 9 miteinander verbunden. Dies ermöglicht ein im Wesentlichen an die Verteilbreite der Verteilvorrichtung 16 angepasstes Auffangen von Erntegut. Mittels der Auffangelemente 1 sollen von der Verteilvorrichtung 16 ausgebrachte Nichtkornbestandteil sowie Kornbestandteile aufgefangen werden, um beispielsweise auftretende Kornverluste der Reinigungsvorrichtung zu bestimmen.

An der Unterseite des Mähdreschers 12 ist zumindest ein quer zur Fahrtrichtung FR verlaufender Träger 18 angeordnet. Der zumindest eine Träger 18 ist bevorzugt zwischen Vorderachse und Hinterachse des Mähdreschers 12 parallel zu diesen verlaufend befestigbar oder befestigt. Insbesondere kann der zumindest eine Träger 18 durch Schraubverbindungen oder dergleichen lösbar an dem Mähdrescher 12 befestigt sein, so dass der zumindest eine Träger 18 nur für Messfahrten am Mähdrescher 12 anzuordnen ist.

An dem zumindest einen Träger 18 sind zumindest zwei Ablagevorrichtungen 19 nebeneinander angeordnet. In dem in Fig. 4 dargestellten Ausführungsbeispiel sind eine Vielzahl von Ablagevorrichtungen 19 äquidistant an dem zumindest einen Träger 18 angeordnet. Zumindest im Bereich unterhalb des Mähdreschers 12 sind die Ablagevorrichtungen 19 angeordnet, so dass sich beim Ausbringen der Auffangelemente 1 eine im Wesentlichen geschlossene Reihe 17 ausbildet. Dadurch, dass die Auffangelemente 1 aus einem gummiartigen Material bestehen, lassen sich diese vom Mähdrescher 12 überfahren, ohne von den Hinterreifen in Mitleidenschaft gezogen zu werden. Die seitliche Verbindung der Auffangelemente 1 miteinander durch die komplementären Verbindungselemente 8, 9 am Überlappungsabschnitt 6 bzw. an der Unterseite des Bodens 2 des benachbarten Auffangelementes 1 sichert die Ablageposition der Reihen 17 beim Überfahren nach erfolgter Ablage auf dem Feldboden. Ein weiterer Vorteil ergibt sich bei der Herstellung des Auffangelements 1 aus einem gummiartigen Material daraus, dass das Auffangelement 1 mit seinen Längs- und Querseitenwänden 3, 4 sowie den optionalen zylindrischen Rückhaltelementen 27 auf der Oberfläche des Bodens 2 einstückig ausgebildet sein kann.

Es sind zumindest zwei Ablagevorrichtungen 19 zur Ablage von Auffangelementen 1 auf dem Boden des Feldes 13 am Mähdrescher 12 angeordnet. Die zumindest zwei Ablagevorrichtungen 19 sind übereinanderliegend angeordnet. Die übereinanderliegende Anordnung von zumindest zwei Ablagevorrichtungen 19 ermöglicht es, bei einer Messfahrt jeweils zumindest zwei Auffangelemente 1 in vorgebbaren Abständen auf dem Feldboden abzulegen.

Zur Ansteuerung der einzelnen Ablagevorrichtungen 19 ist dem Mähdrescher 12 zugeordnete Steuereinheit 21 vorgesehen, welche dazu eingerichtet ist, einen an der jeweiligen Ablagevorrichtung 19 angeordneten Aktuator 20 anzusteuern. Die Aktuatoren 20 können bevorzugt als elektromechanische Aktuatoren ausgeführt sein.

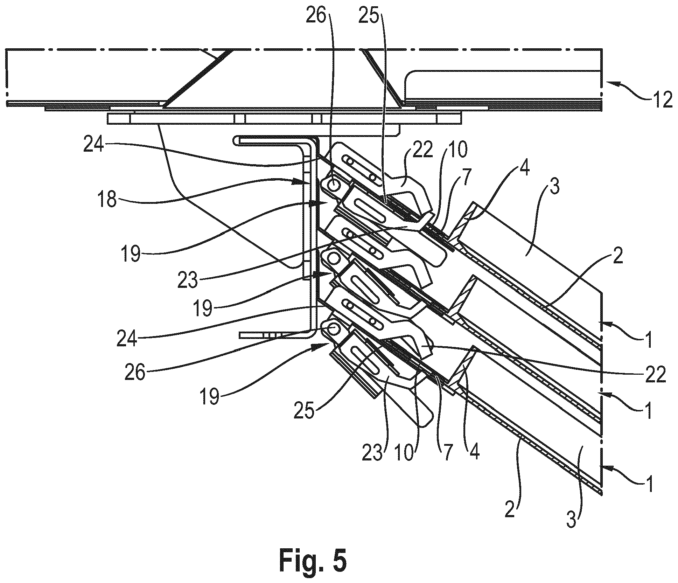

In Fig. 5 ist schematisch und exemplarisch eine Teilansicht des zumindest einen Trägers 18 mit daran angeordneten Ablagevorrichtungen 19 im Längsschnitt. Die Darstellung in Fig. 5 zeigt eine Anordnung von drei Ablagevorrichtungen 19 übereinander. Jede der Ablagevorrichtungen 19 weist zwei einander gegenüberliegend angeordnete Haken 22, 23 auf. Die Haken 22, 23 sind spiegelbildlich an einem Tragelement 24 angeordnet. Das jeweilige Tragelement 24 ist am Träger 18 ortsfest angeordnet. Das Tragelement 24 weist einen in Richtung des Feldbodens geneigten Abschnitt 25 auf, auf dessen Oberseite der Haken 22 befestigt ist. An der Unterseite des Tragelements 24 ist der Haken 23 angeordnet. Der Haken 23 ist durch einen Aktuator 20 relativ zum gegenüberliegenden Haken 22 verschwenkbar ausgeführt ist. Hierzu ist der Haken 23 um eine parallel zum Träger 18 verlaufende Achse 26 schwenkbar. Die Ablagevorrichtungen 19 bestehen im Wesentlichen aus Gleichteilen, wodurch der Herstellaufwand gering gehalten wird.

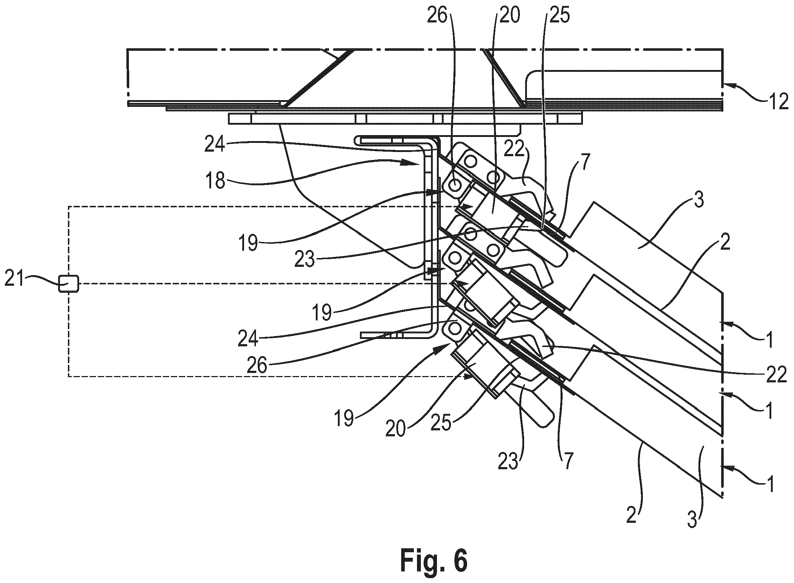

Die Darstellung in Fig. 6 zeigt schematisch und exemplarisch die Teilansicht gemäß Fig. 5 in einer Seitenansicht der Ablagevorrichtungen 19. Die Aktuatoren 20 der jeweiligen Ablagevorrichtung 19 stehen mit der Steuereinheit 21 signaltechnisch in Verbindung. Die Haken 22, 23 überlappen sich in einer Halteposition des Auffangelementes 1 abschnittsweise mit ihren freien Enden. Dabei durchgreift der Haken 23 die Zugöse 10 des Auffangelementes 1 und hält das Auffangelement 1 während der Fahrt fest. Das unterste Auffangelement 1 liegt in der von den Haken 22, 23 eingenommenen Halteposition während der Messfahrt abschnittsweise auf dem Feld 13 auf. Die darüber angeordneten Auffangelemente 1 liegen abschnittsweise auf dem zuunterst eingehängten Auffangelement 1 auf.

Um ein Auffangelement 1 auf dem Feld 13 abzulegen, wird der Aktuator 20 von der Steuereinheit 21 angesteuert. Dabei wird der Haken 23 relativ zum Haken 22 um die Achse 26 in eine Freigabeposition geschwenkt. In der Freigabeposition sind das freie Ende des schwenkbaren Hakens 23 zum freien Ende des anderen Hakens 22 so weit beabstandet, dass sich ein Spalt zwischen diesen ausbildet. Dabei schwenkt der Haken 23 soweit zurück, dass dieser mit der Zugöse 10 außer Eingriff gebracht wird. In der Freigabeposition befindet sich das freie Ende des schwenkbaren Hakens 23 unterhalb des geneigten Abschnitts 25 des Tragelements 24. Das so freigegebene Auffangelement 1 kann sich vom Abschnitt 25 lösen und auf dem Feld 13 respektive Feldboden abgelegt werden.

Die Fig. 5 und Fig. 6 zeigen beide Positionen, in denen sich die Haken 22, 23 der Ablagevorrichtungen 19 befinden können. Dabei befinden sich die Haken 22, 23 der beiden unteren Ablagevorrichtungen 19 in ihrer Freigabeposition und die Haken 22, 23 der zuoberst angeordneten Ablagevorrichtung 19 befinden sich in ihrer Halteposition.

Um, wie in Fig. 4 bereits dargestellt, eine Reihe 17 von Auffangelement 1 im Wesentlichen fluchtend nebeneinander auf dem Feld 13 abzulegen, werden die Aktuatoren 20 von in einer horizontalen Ebene nebeneinander angeordneter Ablagevorrichtungen 19 zeitgleich von der Steuereinheit 21 angesteuert. Bevorzugt werden zuerst die Aktuatoren 20 von in einer horizontalen Ebene nebeneinander angeordneter Ablagevorrichtungen 19 angesteuert, die zum Feld 13 am weitesten beabstandet sind.

### Bezugszeichenliste

- 1: Auffangelement
- 2: Boden
- 3: Längsseitenwand
- 4: Querseitenwand
- 5: Mittensteg
- 6: Überlappungsabschnitt
- 7: Befestigungsabschnitt
- 8: Verbindungselement
- 9: Verbindungselement
- 10: Zugöse
- 11: Druckknopf
- 12: Mähdrescher
- 13: Feld
- 14: Erntegut
- 15: Vorsatzgerät
- 16: Verteilvorrichtung
- 17: Reihe
- 18: Träger
- 19: Ablagevorrichtung
- 20: Aktuator
- 21: Steuereinheit
- 22: Haken
- 23: Haken
- 24: Tragelement
- 25: Abschnitt
- 26: Achse
- 27: Element
- 28: Reihe
- 29: Reihe
- 30: Abstand
- FR: Fahrtrichtung

## Patentansprüche

1. Auffangelement (1) zum Auffangen von Partikeln zur Beprobung, die von einer selbstfahrenden Erntemaschine, insbesondere einem Mähdrescher (12), durch zumindest eine Verteilvorrichtung (16) ausgebracht werden, wobei das Auffangelement (1) einen quaderförmigen Boden (2) und zwei Längsseitenwände (3) und zumindest zwei Querseitenwände (4) aufweist, die senkrecht zum Boden (2) orientiert sind, die einen Auffangbereich des Auffangelementes (1) begrenzen, **dadurch gekennzeichnet, dass** das Auffangelement (1) einen randseitigen Überlappungsabschnitt (6) aufweist, der sich lateral an den Boden (2) anschließt und über eine der Längsseitenwände (3) hinausragt.

2. Auffangelement (1) nach Anspruch 1, **dadurch gekennzeichnet, dass** die dem Auffangen der Partikeln dienende Oberfläche des Bodens (2) mit sich senkrecht zum Boden (2) erstreckenden zylindrischen Rückhalteelementen (27) versehen ist, deren Höhe zumindest der hälftigen Höhe der Längs- und Querseitenwände (3, 4) entspricht.

3. Auffangelement (1) nach Anspruch 1 oder 2, **dadurch gekennzeichnet, dass** sich der randseitige Überlappungsabschnitt (6) zumindest abschnittsweise parallel zur Längsseitenwand (3) erstreckt.

4. Auffangelement (1) nach Anspruch 1 bis 3, **dadurch gekennzeichnet, dass** der randseitige Überlappungsabschnitt (6) auf seiner Oberseite zumindest ein Verbindungselement (8) aufweist und dass der Boden (2) an seiner Unterseite auf einem dem Überlappungsabschnitt (6) gegenüberliegenden Abschnitt zumindest ein komplementäres Verbindungselement (9) aufweist.

5. Auffangelement (1) nach einem der Ansprüche 1 bis 4, **dadurch gekennzeichnet, dass** das Auffangelement (1) einen randseitigen Befestigungsabschnitt (7) aufweist, der sich lateral an den Boden (2) anschließt und über eine der Querseitenwände (4) hinausragt.

6. Auffangelement (1) nach Anspruch 5, **dadurch gekennzeichnet, dass** der Befestigungsabschnitt (7) mit zumindest einer metallverstärkten Zugöse (10) ausgeführt ist.

7. Auffangelement (1) nach Anspruch 6, **dadurch gekennzeichnet, dass** am Befestigungsabschnitt benachbart zu der zumindest einen Zugöse (10) Druckknöpfe (11) angeordnet sind.

8. Auffangelement (1) nach Anspruch 6 oder 7, **dadurch gekennzeichnet, dass** genau eine Zugöse (10) vorgesehen ist, die bezogen auf die Breite des Bodens (2) zentriert im Befestigungsabschnitt (7) angeordnet ist.

9. Selbstfahrender Mähdrescher (12), umfassend ein Vorsatzgerät (15) zum Ernten von Erntegut, eine Abscheidevorrichtung, eine Reinigungsvorrichtung sowie zumindest eine Verteilvorrichtung (16), die dazu eingerichtet ist, von der Abscheidevorrichtung und der Reinigungsvorrichtung zugeführtes Erntegut (14) hinter dem Mähdrescher (12) auszubringen, **dadurch gekennzeichnet, dass** an der Unterseite des Mähdreschers (12) zumindest zwei Ablagevorrichtungen (19) zur Ablage von Auffangelementen (1) auf dem Boden (2) angeordnet sind, wobei die zumindest zwei Ablagevorrichtungen (19) übereinanderliegend angeordnet sind.

10. Selbstfahrender Mähdrescher (12) nach Anspruch 9, **dadurch gekennzeichnet, dass** die zumindest zwei Ablagevorrichtungen (19) zur Ablage von Auffangelementen (1) eingerichtet sind, die nach einem der Ansprüche 1 bis 8 ausgeführt sind.

11. Selbstfahrender Mähdrescher (12) nach Anspruch 9 oder 10, **dadurch gekennzeichnet, dass** die jeweilige Ablagevorrichtung (19) zwei einander gegenüberliegend angeordnete Haken (22, 23) aufweist, wobei ein Haken (22, 23) durch einen Aktuator (20) relativ zum gegenüberliegenden Haken (22, 23) verschwenkbar ausgeführt ist.

12. Selbstfahrender Mähdrescher (12) nach Anspruch 11, **dadurch gekennzeichnet, dass** sich in einer Halteposition der Ablagevorrichtung (19) die Haken (22, 23) mit ihren freien Enden abschnittsweise überlappen und in einer Freigabeposition das freie Ende des schwenkbaren Hakens (22, 23) zum freien Ende des anderen Hakens (22, 23) so weit beabstandet ist, dass sich ein Spalt ausbildet.

13. Selbstfahrender Mähdrescher (12)nach Anspruch 11 oder 12, **dadurch gekennzeichnet, dass** dem Mähdrescher (12) eine Steuereinheit (21) zugeordnet ist, die dazu ausgeführt und eingerichtet ist, den Aktuator (20) der jeweiligen Ablagevorrichtung (19) anzusteuern, um den schwenkbaren Haken (22, 23) zwischen der Halteposition und der Freigabeposition zu überführen.

14. Selbstfahrender Mähdrescher (12) nach einem der Ansprüche 9 bis 13, **dadurch gekennzeichnet, dass** zwischen Vorderachse und Hinterachse des Mähdreschers (12) zumindest ein Träger (18) parallel verlaufend befestigbar oder befestigt ist, an welchem die zumindest zwei Ablagevorrichtungen (19) übereinander liegend angeordnet sind.

15. Selbstfahrender Mähdrescher (12) nach Anspruch 14, **dadurch gekennzeichnet, dass** an dem zumindest einen Träger (18) zumindest zwei Ablagevorrichtungen (19) in einer horizontalen Ebene liegend nebeneinander angeordnet sind.
